# EUROPÄISCHE PATENTSCHRIFT

(11) **EP 0 718 086 B1**
(45) Veröffentlichungstag und Bekanntmachung des Hinweises auf die Patenterteilung: **01.03.2000**
(21) Anmeldenummer: 95117040.6
(22) Anmeldetag: 30.10.1995
(51) Int. Cl.: B29C 47/68

(54) **Stützplatte für ein Filter**
Support plate for a filter
Plaque de support pour un filtre

(30) Priorität: 19.12.1994 DE 4445254
(43) Veröffentlichungstag der Anmeldung: 26.06.1996
(73) Patentinhaber: WIL-MAN POLYMER-FILTRATION GmbH, 48493 Wettringen (DE)
(72) Erfinder: Wilken-Trenkamp, Ludger, D-48329 Havixbeck (DE)
(74) Vertreter: Lau-Loskill, Philipp, Dipl.-Phys.

(56) Entgegenhaltungen:
- FR-A- 2 175 974
- US-A- 3 938 925
- US-A- 5 346 383
- PATENT ABSTRACTS OF JAPAN vol. 016 no. 177 (M-1241) ,28.April 1992 & JP-A-04 018322 (SEKISUI CHEM CO LTD) 22.Januar 1992,

## Beschreibung

Die vorliegende Erfindung betrifft eine Stützplatte für ein in einer Fluidfiltervorrichtung vorgesehenes Filter mit den Merkmalen des Oberbegriffs des Patentanspruchs 1.

Stützplatten für Filter sind in unterschiedlichsten Ausgestaltungen bekannt und seit langem im technischen Einsatz. Hierbei bewirken diese Stützplatten, das ein in einem Fluidstrom im wesentlichen senkrecht zur Strömungsrichtung angeordnetes Filter durch die Stützplatte gehaltert wird, so daß die Position des Filters auch dann nicht verändert wird, wenn das jeweils zu filtrierende Fluid, beispielsweise eine Flüssigkeit oder eine polymere Schmelze, das Filter mit einer hohen Strömungsgeschwindigkeit passiert.

Vielfach umfaßt eine bekannte Filteranordnung, insbesondere zum Filtrieren von Polymerschmelzen, in Strömungsrichtung des zu filtrierenden Fluids gesehen eine Stützplatte, ein an der Stützplatte anliegendes Filter, das sich wiederum in Kontakt mit einer Filterdistanzplatte befindet, wobei in der Regel diesem Filter-Sandwich noch eine Lochplatte zugeordnet ist, die ein Lager ausbildet und dadurch gewährleistet, daß beim Filtrieren des Fluids das Filter-Sandwich im Fluidstrom sicher gehaltert wird.

Um bei den bekannten Filtereinrichtungen, die insbesondere die zuvor beschriebene Filteranordnung aufweist, bei einer Beladung des Filters mit aus dem Fluid abgeschiedenen Teilchen eine besonders einfache Regenerierung des Filters zu erreichen, ist es desweiteren bekannt, durch geeignete Steuereinrichtungen den Fluidstrom derart bezüglich der Strömungsrichtung umzulenken, daß der Fluidstrom die zuvor beschriebene Filteranordnung in entgegengesetzter Richtung durchströmt. Hierbei passiert somit der Fluidstrom zunächst die Lochplatte, dann die Filterdistanzplatte, anschließend das Filter und hiernach die Stützplatte, wobei in dieser Rückspülstellung das Filter ebenfalls durch die Stützplatte in seiner Position gehaltert wird.

Die bekannte und in der vorstehend beschriebenen Filteranordnung verwendete Stützplatte weist eine Vielzahl von Durchtrittsöffnungen auf, wobei diese Durchtrittsöffnungen als zylindrische Bohrungen in der etwa 2 mm bis etwa 15 mm dicken Stützplatte ausgebildet sind.

Als besonderer Nachteil hat sich jedoch bei der bekannten Stützplatte herausgestellt, daß sich das Filter insbesondere im Bereich der Durchtrittsöffnungen besonders schnell durch abfiltrierte Fremdpartikel zusetzt, so daß hierbei bereits nach einer kurzen Standzeit eine Regenerierung des Filters erforderlich wird.

Aus der US 3,938,925 A ist ein Spinnkopf zur Herstellung von synthetischen Filamenten bekannt, wobei der bekannte Spinnkopf kapillarartig ausgebildete Durchtrittsöffnungen aufweist. In Strömungsrichtung der durch diesen Spinnkopf geförderten polymeren Schmelze gesehen befindet sich stromab eines Filters eine Lochplatte, die das hierauf aufliegende Filter stützt, wobei oberhalb dieses Filters bei dem bekannten Spinnkopf lediglich ein Filterverteilungsraum vorgesehen ist, so daß in Strömungsrichtung der polymeren Schmelze gesehen die über Kanäle zugeführte polymere Schmelze direkt in Kontakt mit dem Filter tritt.

Der vorliegenden Erfindung liegt die Aufgabe zugrunde, eine Stützplatte der angegebenen Art zur Verfügung zu stellen, die zwischen zwei Regenerierzyklen eine besonders lange Standzeit besitzt.

Diese Aufgabe wird erfindungsgemäß durch eine Stützplatte mit den kennzeichnenden Merkmalen des Patentanspruchs 1 gelöst.

Die erfindungsgemäße Stützplatte dient zur Halterung eines in einer Fluidfiltervorrichtung vorgesehenen und im Wesentlichen senkrecht zur Strömungsrichtung angeordneten Filters. Hierbei ist in Strömungsrichtung des zu filtrierenden Fluids gesehen vor dem Filter die erfindungsgemäße Stützplatte, an die das Filter anliegt, angeordnet, während das Filter selbst von seiner Rückseite von einer Lochplatte gelagert ist. Die erfindungsgemäße Stützplatte besitzt eine Vielzahl von Durchtrittsöffnungen, die sich von der Frontseite der Stützplatte zu der Rückseite derselben erstrecken, wobei jede Durchtrittsöffnung im Bereich der Frontseite und im Bereich der Rückseite einen relativ zum kleinsten Querschnitt der Durchtrittsöffnung vergrößerten Endbereich aufweist und die Endbereiche derart gestaltet sind, daß die Gesamtfläche der zwischen den Durchtrittsöffnungen vorgesehenen Stege dadurch verkleinert ist, daß die Stützplatte auf ihrer zum Filter hin weisenden Rückseite in der Ebenen der Rückseite lediglich im Wesentlichen dreieckartige Stegabschnitte und auf ihrer vom Filter abgewandten Frontseite in der Ebenen der Frontseite lediglich linienförmige Stege aufweist.

Klarstellend wird hier darauf hingewiesen, daß der Begriff Frontseite der Stützplatte die Fläche der Stützplatte bezeichnet, die in Strömungsrichtung des zu filtrierenden Fluids gesehen mit dem zu filtrierenden Fluid als erstes in Kontakt tritt, während der Begriff Rückseite der Stützplatte die Fläche bezeichnet, die relativ zur Frontseite der Stützplatte entgegengesetzt angeordnet ist und zum Filter hin weist.

Die erfindungsgemäße Stützplatte weist eine Reihe von Vorteilen auf. So ist zunächst festzuhalten, daß'es bei der erfindungsgemäßen Stützplatte im Bereich der Durchtrittsöffnungen nicht, wie bei der bekannten, eingangs beschriebenen Stützplatte, zu einer schnellen Zusetzung des Filters infolge der abgeschiedenen Fremdpartikel kommt, was darauf zurückgeführt wird, daß der Steganteil bei der erfindungsgemäßen Stützplatte entsprechend verkleinert ist und damit entsprechend vergrößerte Endbereiche der Durchtrittsöffnungen ausgebildet werden, so daß Strömungstotzonen bei der erfindungsgemäßen Stützplatte nahezu ausgeschlossen sind. Dies wiederum führt dazu, daß nahezu die gesamte Fläche des Filters für den eigentlichen Filtriervorgang genutzt werden kann, wodurch die im Vergleich zu den bekannten Stützplatten erheblich verlängerte Standzeiten zwischen zwei Regenerierzyklen erklärlich werden. Desweiteren bewirken die an der Frontseite und im Bereich der Rückseite an jeder Durchtrittsöffnung vorgesehenen vergrößerten und speziell geformten Endbereiche, daß die Strömungsverhältnisse des zu filtrierenden Fluids innerhalb der Durchtrittsöffnungen und unmittelbar in Strömungsrichtung des Fluids gesehen hinter der Stützplatte verändert werden, so daß die erfindungsgemäße Stützplatte im Gegensatz zu einer herkömmlichen Stützplatte einen wesentlich geringeren Gegendruck beim Durchströmen mit dem Fluid aufbaut, was sich wiederum in einem gesteigerten Durchsatz und damit in einer Erhöhung der Produktionsleistung ausdrückt.

Aufgrund der vorstehend beschriebenen Verkleinerung der Stegflächen und der damit verbundenen Erweiterungen der Endbereiche der Durchtrittsöffnungen bewirkt die erfindungsgemäße Stützplatte desweiteren noch, daß bei einer Rückspülung des Filters, herbeigeführt durch eine Umkehrung der Fluidströmungsrichtung, das mit Fremdpartikeln beladene Filter wesentlich schneller und mit einem deutlich höheren Wirkungsgrad freigespült werden kann, wobei die erfindungsgemäße Stützplatte in dieser Betriebsweise dann besonders wirksam und sicher das an der Stützplatte anliegende und hiervon abgestützte Filter haltert. Ein derartiges vollständiges Rückspülen des Filters innerhalb von kürzester Zeit und somit eine Regenerierung der Filteranordnung ist mit den bekannten Stützplatten nicht möglich, da hierbei relativ große Bereiche der Filterfläche gegen die Stege, die zwischen den zylindrischen Bohrungen vorhanden sind, aufgrund des von dem strömenden Fluids hervorgerufenen Drucks gedrückt werden, was dazu führt, daß diese Filterbereiche dann nicht oder allenfalls nur ungenügend regeneriert werden.

Überraschend konnte weiter festgestellt werden, daß bereits eine relativ kleine, durch die Summe der Stegabschnitte gebildete Auflagefläche für das Filter genügt, um dieses auch in der Rückspülstellung einwandfrei abzustützen und zu haltern, ohne daß es dabei zu einer Beschädigung des Filters kommt.

Eine besonders geeignete Ausführungsform der erfindungsgemäßen Stützplatte sieht vor, daß die zuvor beschriebenen Stege bzw. die Stegabschnitte, die zwischen den vergrößerten Endbereichen der Durchtrittsöffnungen angeordnet sind, eine Gesamtfläche in der Ebenen der Frontseite und/oder Rückseite einnehmen, die zwischen 30 % und 2 %, bezogen auf die Gesamtfläche der Frontseite bzw. Rückseite, liegt. Insbesondere dann, wenn die zuvor genannte Gesamtfläche der Stege bzw. Stegabschnitte einen Wert einnimmt, der zwischen 15 % und 5 %, bezogen auf die Gesamtfläche der Frontseite und/oder Rückseite, variiert, lassen sich die mit der erfindungsgemäßen Stützplatte besonders lange Standzeiten des Filters beim Filtrieren erreichen, ohne daß es hierbei zu einer Beschädigung des Filters kommt. Auch ist bei einer derartigen Ausgestaltung der erfindungsgemäßen Stützplatte der Durchsatz an zu filtrierendem Fluid pro Zeiteinheit im Vergleich zu einer herkömmlichen Stützplatte erheblich, insbesondere um einen Faktor von 1,2 bis 1,6, vergrößert, was darauf zurückgeführt wird, daß einerseits die Strömungsverhältnisse in jeder Durchtrittsöffnung entsprechend positiv verändert und optimiert werden und andererseits der von der Stützplatte hervorgerufene Gegendruck im Vergleich zu einer bekannten Stützplatte erheblich verringert wird.

Eine besonders geeignete Ausführungsform der erfindungsgemäßen Stützplatte sieht vor, daß jede Durchtrittsöffnung einen zur Frontseite der Stützplatte weisenden kegelstumpfförmigen vergrößerten Endbereich und einen zur Rückseite der Frontplatte weisenden kegelstumpfförmigen vergrößerten Endbereich besitzt. Hierdurch wird die Fläche der zwischen den Durchtrittsöffnungen befindlichen Stege bzw. Stegabschnitte erheblich reduziert und desweiteren erreicht, daß innerhalb einer jeden Durchtrittsöffnung optimale Strömungsverhältnisse herrschen, was sich insbesondere bei relativ hochviskosen Fluiden, so zum Beispiel Polymerschmelzen, durch einen besonders hohen Fluiddurchsatz und einen besonders geringen Gegendruck äußerst positiv bemerkbar macht.

In Weiterbildung der zuvor beschriebenen Ausführungsform der erfindungsgemäßen Stützplatte ist bei einer anderen Ausführungsvariante der erfindungsgemäßen Stützplatte jede Durchtrittsöffnung so gestaltet, daß die beiden kleineren Grundflächen der beiden kegelstumpfförmigen Endbereiche unter Ausbildung der Durchtrittsöffnung unmittelbar aneinanderstoßen. Hierbei besitzt somit jede Durchtrittsöffnung eine Gestalt, die der Raumform entspricht, die durch Aufeinandersetzen der kleineren Grundfläche von zwei Kegelstümpfen entspricht.

Eine andere Weiterbildung der zuvor beschriebenen Ausführungsform der erfindungsgemäßen Stützplatte, die kegelstumpfförmige Endbereiche an jeder Durchtrittsöffnung aufweist, sieht vor, daß zwischen dem kegelstumpfförmigen Endbereich der Frontseite und dem kegelstumpfförmigen Endbereich der Rückseite ein zylindrischer Mittelbereich angeordnet ist, wobei vorzugsweise hierbei der zylindrische Mittelbereich einen solchen Durchmesser hat, der identisch ist mit jeweils der kleinsten Grundfläche des kegelstumpfförmigen Endbereiches. Somit besitzt hierbei jede Durchtrittsöffnung eine räumliche Gestalt, wie sie entsteht, wenn man zwischen zwei Kegelstümpfen einen Zylinder derart anordnet, daß seine kreisförmigen Stirnflächen jeweils in Kontakt treten mit der kleinsten Grundfläche eines jeden Kegelstumpfes.

Um besonders optimale Strömungsverhältnisse in den Durchtrittsöffnungen zu erreichen, bietet es sich an, die Seitenlinien des Kegelstumpfes der kegelstumpfförmigen Endbereiche relativ zur Frontseite bzw. relativ zur Rückseite der erfindungsgemäßen Stützplatte unter einem Winkel α zwischen 50° und 70°, vorzugsweise zwischen 55° und 65° und insbesondere unter einem Winkel α von 60°, auszurichten.

Selbstverständlich kann die erfindungsgemäße Stützplatte auch anders geformte Durchtrittsöffnungen aufweisen, als diese zuvor bei den verschiedenen Ausführungsformen, die kegelstumpfförmige Endbereiche besitzen, beschrieben sind, wobei hierzu lediglich sicherzustellen ist, daß diese anders geformten Durchtrittsöffnungen den eingangs beschriebenen vergrößerten Endbereich und die ebenfalls vorstehend genannten verkleinerten Stegflächen besitzen. Hier bietet es sich desweiteren an, jede Durchtrittsöffnung so zu gestalten, daß sie in Strömungsrichtung des Fluids gesehen in einem axialen und zentralen Schnitt bikonkav ausgestaltete Seitenwände aufweist. Eine derartige Ausgestaltung nähert sich bezüglich der Form der Durchtrittsöffnungen der Ausführungsform, die zuvor beschrieben ist und die kegelstumpfförmige Endbereiche aufweist, wobei die beiden kegelstumpfförmigen Endbereiche unter Ausbildung der Durchtrittsöffnung unmittelbar im Bereich der kleinsten Grundflächen der Kegelstümpfe unmittelbar aneinanderstoßen.

Grundsätzlich ist zu der erfindungsgemäßen Stützplatte desweiteren festzuhalten, daß sie eine maximale Anzahl an Durchtrittsöffnungen aufweist. Insbesondere dann, wenn die Stützplatte eine erste Reihe von unmittelbar dem Stützplattenrand zugeordneten Durchtrittsöffnungen besitzt und wenn die übrigen Durchtrittsöffnungen so angeordnet sind, daß jede übrige Durchtrittsöffnung von sechs weiteren Durchtrittsöffnungen umgeben ist, wird durch eine derartige Anordnung der Durchtrittsöffnungen sichergestellt, daß eine besonders hohe Zahl von Durchtrittsöffnungen in der Stützplatte angeordnet werden kann.

Bezüglich der Gestaltung der erfindungsgemäßen Stützplatte ist allgemein festzuhalten, daß sie diese Gestaltung nach der Form des jeweiligen Filtergehäuses richtet. Vorzugsweise weist jedoch die erfindungsgemäße Stützplatte die Form eines Vieleckes, insbesondere eine Sechseckes bis Zwölfeckes, oder die Form eines Kreises auf. Diese Ausführungsformen der erfindungsgemäßen Stützplatte haben sich insbesondere dort bewährt, wo die erfindungsgemäßen Stützplatten zusammen mit einem Filter, ggf. einer Distanzscheibe und/oder einer Lochplatte innerhalb eines als Kolben ausgebildeten Filtergehäuses angeordnet wird, wie dieses vorzugsweise zur Filtrierung von Polymerschmelzen eingesetzt und beispielsweise in der DE-AS 18 00 169 beschrieben ist.

Wie bereits vorstehend dargelegt ist, wird die erfindungsgemäße Stützplatte vorzugsweise zur Halterung eines Filters in einer einem Extruder für Kunststoffe zugeordneten Filtereinrichtung verwendet, insbesondere dort, wo die Filtereinrichtung derart ausgestaltet ist, daß sie in einer ersten Arbeitsstellung ein Filtrieren der polymeren Kunststoffschmelze und in einer zweiten Arbeitsstellung ein Regenerieren des Filters erlaubt, ohne daß es hierbei erforderlich ist, das Filter auszubauen.

Vorteilhafte Weiterbildungen der erfindungsgemäßen Stützplatte sind in den Unteransprüchen angegeben.

Die erfindungsgemäße Stützplatte wird nachfolgend anhand eines Ausführungsbeispieles in Verbindung mit der Zeichnung näher erläutert. Es zeigen:
- Figur 1: eine Schnittansicht einer Filteranordnung, die in einem als Zylinder ausgebildeten Filtergehäuse vorgesehen ist;
- Figur 2: eine Draufsicht auf die in Figur 1 gezeigte Stützplatte, betrachtet aus der Richtung des Filters;
- Figur 3: eine Schnittansicht durch die in Figur 2 gezeigte Stützplatte längs der Linie A-B; und
- Figur 4: eine Draufsicht der in Figur 2 gezeigten Stützplatte, jedoch von der anderen Seite.

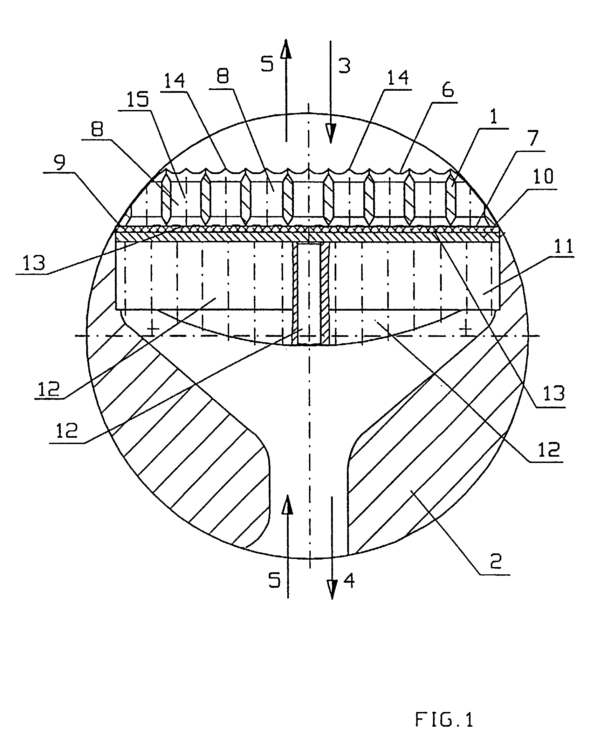

In den Figuren 1 bis 4 sind die selben Teile mit den selben Bezugszeichen bezeichnet.

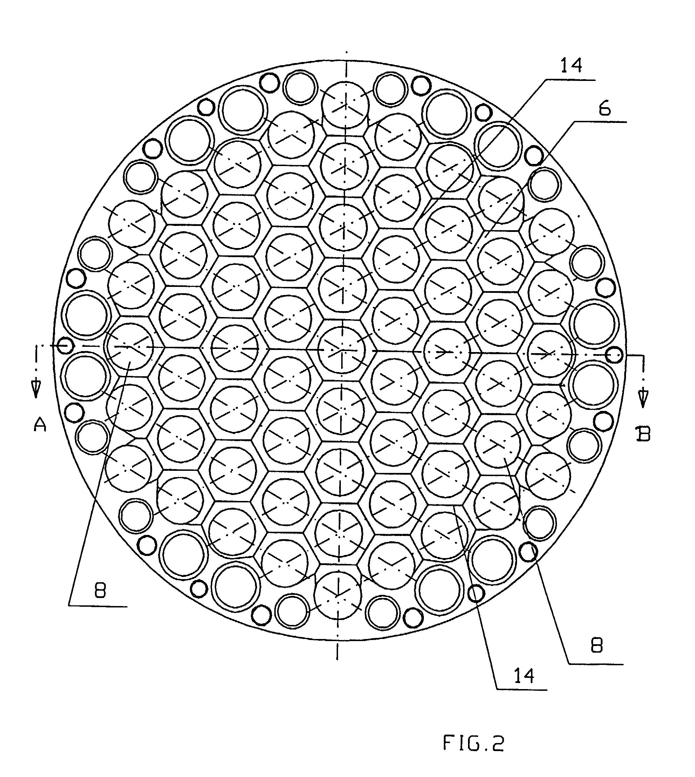

Die in Figur 1 im Schnitt dargestellte Filteranordnung entspricht mit Ausnahme einer nachfolgend anhand der Figuren 2 bis 4 noch näher beschriebenen Stützplatte 1 einer Filteranordnung, wie diese beispielsweise aus der DE-AS 18 00 169 bekannt ist. Hierbei ist die Filteranordnung in einem zylindrischen Kolben 2 angeordnet, wobei dieser zylindrische Kolben 2 gleichzeitig das Gehäuse für die Filteranordnung ausbildet.

Während der Filtrierung eines Fluidstromes, insbesondere einer hochviskosen polymeren Schmelze, wird dieser Fluidstrom in Pfeilrichtung 3 durch die Filteranordnung gefördert.

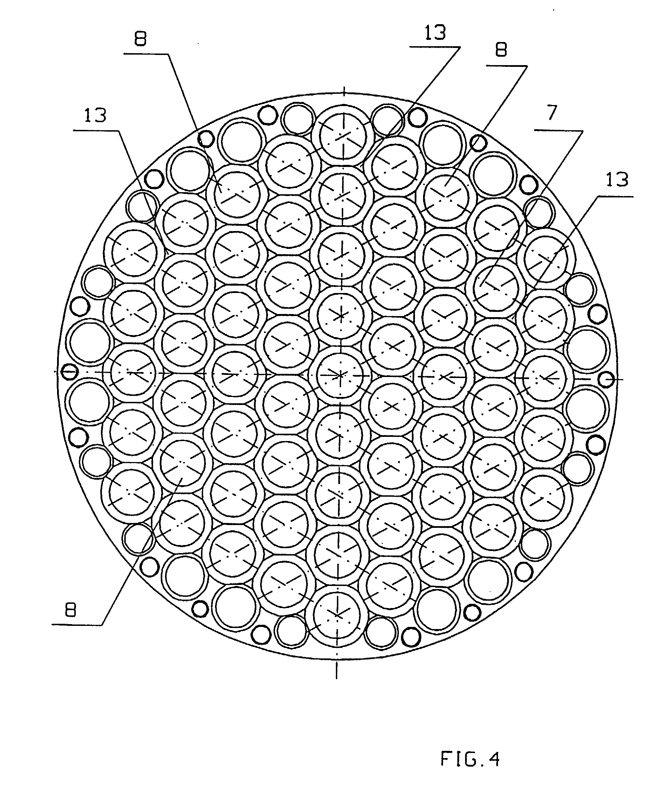

Die Stützplatte 1 weist eine Frontseite 6 sowie eine Rückseite 7 auf, wobei die Draufsicht gemäß Figur 2 die Frontseite 6 der Stützplatte 1 und die Draufsicht gemäß Figur 4 die Rückseite 7 der Stützplatte 1 abbilden. Innerhalb der Stützplatte 1 ist eine Vielzahl von Durchtrittsöffnungen 8 angeordnet, die sich von der Frontseite 6 zur Rückseite 7 erstrecken und von denen nur einige, willkürlich herausgegriffene Durchtrittsöffnungen in den Figuren 1 bis 4 beziffert sind. In Strömungsrichtung 3 des zu filtrierenden Fluids schließt sich stromab der Stützplatte 1 an die Stützplatte 1 ein Filter 9 (Figur 1) an, wobei in der gezeigten Ausführungsform gemäß Figur 1 hier nur ein einziges Filter 9 abgebildet ist, während selbstverständlich dieses Filter 9 auch aus einem Satz von Filtern, insbesondere zwei bis sechs Filtern, bestehen kann.

Stromab in Strömungsrichtung 3 gesehen hinter dem Filter 9 ist eine Filterdistanzplatte 10 angeordnet, die ihrerseits wiederum von einer Lochplatte 11 gestützt wird. Auch die Lochplatte 11 besitzt Durchtrittsöffnungen 12, so daß das filtrierte Fluid stromab der Lochplatte 11 in Pfeilrichtung 4 die Filteranordnung verläßt.

Ist nunmehr das Filter 9 mit Schmutzpartikeln und sonstigen Verunreinigungen beladen, wird der Fluidstrom durch eine nicht gezeigte Steuereinrichtung derart umgelenkt, daß während dieser Regenerierungsstufe nunmehr das Fluid in Pfeilrichtung 5 in die Filteranordnung (Figur 1) einströmt. Hier gelangt es über die Durchtrittsöffnungen 12 der Lochplatte 11 und durch die Filterdistanzplatte 10 zum Filter 9 und bewirkt dann bei seinem weiteren Transport durch die Durchtrittsöffnungen 8 der Stützplatte 1, daß das Filter 9 von abfiltrierten Fremdpartikeln und sonstigen Verunreinigungen befreit wird.

Insbesondere in dieser Produktionsstellung bewirkt die Stützplatte 1, daß das Filter 9 sicher und dauerhaft in seiner in der Figur 1 gezeigten Position gehaltert und abgestützt wird, wozu eine Vielzahl von dreieckförmigen Stegabschnitten 13 (Figur 4) an der Oberfläche des Filter 9 anliegen. Bedingt dadurch, daß die Gesamtfläche der Stegabschnitte 13 relativ zur Fläche der Rückseite 7 der Stützplatte 1 nur eine Fläche von etwa 5 % einnimmt, entstehen keine Strömungstotzonen, so daß bei der zuvor beschriebenen Regenerierung die gesamte beladene Oberfläche des Filters 9 freigespült wird.

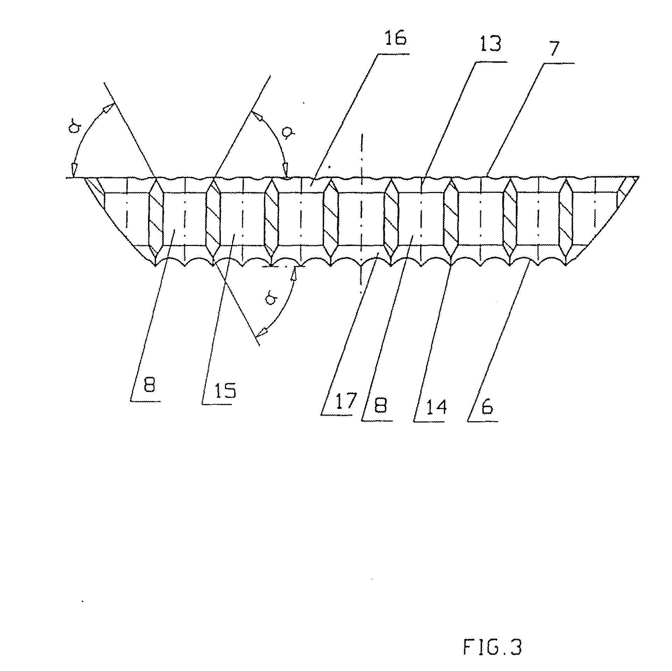

Die Stützplatte 1 weist in der Ebenen der Frontseite 6 nur linienförmige Stegabschnitte 14 auf, die sich dachförmig zur Mitte der Stützplatte hin verbreitern, wie dies am besten in den Figuren 1 und 3 zu erkennen ist.

Jede Durchtrittsöffnung 8 in der Stützplatte 1 besteht aus einem zylindrischen Mittelbereich 15, wobei zur Frontseite 6 hin weisend sich an den zylindrischen Mittelbereich 15 ein kegelstumpfförmige Endbereich 16 und zur Rückseite 7 der Stützplatte hin ebenfalls ein kegelstumpfförmig und identisch ausgebildeter Endbereich 17 anschließt.

Hierbei sind die Seitenlinien der zuvor genannten beiden Kegelstümpfe 16 und 17 relativ zur Ebenen der Frontseite bzw. der Ebenen der Rückseite unter einem Winkel α von 60° angeordnet.

Wie insbesondere aus Figur 1 zu erkennen ist, haltert die Stützplatte 1 das Filter 9 sowohl in der Strömungsrichtung 3 (Filtrierrichtung) als auch in der Strömungsrichtung 5 (Regenerierrichtung).

## Patentansprüche

1. Stützplatte für ein in einer Fluidfiltervorrichtung vorgesehenes und im wesentlichen senkrecht zur Strömungsrichtung angeordnetes Filter, das von seiner Rückseite von einer Lochplatte gelagert ist, dadurch gekennzeichnet, daß in Strömungsrichtung (3) des zu filtrierenden Fluids gesehen vor dem Filter (9) die Stützplatte angeordnet ist, an die das Filter (9) anliegt, daß die Stützplatte eine Vielzahl von Durchtrittsöffnungen aufweist, die sich von der Frontseite der Stützplatte zu der Rückseite derselben erstrecken, und jede Durchtrittsöffnung (8) im Bereich der Frontseite (6) und im Bereich der Rückseite (7) einen relativ zum kleinsten Querschnitt der Durchtrittsöffnung (8) vergrößerten Endbereich (16, 17) aufweist, wobei die Endbereiche (16, 17) derart gestaltet sind, daß die Gesamtfläche der zwischen den Durchtrittsöffnungen (8) vorgesehenen Stege (13, 14) dadurch verkleinert ist, daß die Stützplatte (1) auf ihrer zum Filter (9) hin weisenden Rückseite (7) in der Ebenen der Rückseite (7) lediglich im wesentlichen dreieckartige Stegabschnitte (13) und auf ihrer vom Filter (9) abgewandten Frontseite (6) in der Ebenen der Frontseite (6) lediglich linienförmige Stege (14) aufweist.

2. Stützplatte nach Anspruch 1, dadurch gekennzeichnet, daß die Stege (14) bzw. die Stegabschnitte (13) eine Gesamtfläche in der Ebenen der Frontseite (6) bzw. Rückseite (7) einnehmen, die zwischen 30 % und 2 %, bezogen auf die Gesamtfläche der Frontseite (6) bzw. Rückseite (7), beträgt.

3. Stützplatte nach Anspruch 1 oder 2, dadurch gekennzeichnet, daß die Stege (14) bzw. die Stegabschnitte (13) eine Gesamtfläche in der Ebenen der Frontseite (6) bzw. Rückseite (7) einnehmen, die zwischen 15 % und 5 %, bezogen auf die Gesamtfläche der Frontseite (6) bzw. Rückseite (7), beträgt.

4. Stützplatte nach einem der vorangehenden Ansprüche, dadurch gekennzeichnet, daß jede Durchtrittsöffnung (8) einen zur Frontseite (6) der Stützplatte (1) weisenden kegelstumpfförmigen Endbereich (17) und einen zur Rückseite (7) der Frontplatte (1) weisenden kegelstumpfförmigen Endbereich (16) umfaßt.

5. Stützplatte nach Anspruch 4, dadurch gekennzeichnet, daß die Grundflächen der beiden kegelstumpfförmigen Endbereiche (16, 17) unter Ausbildung der Durchtrittsöffnung (8) unmittelbar aneinander stoßen.

6. Stützplatte nach Anspruch 4, dadurch gekennzeichnet, daß jede Durchtrittsöffnung (8) eine zwischen den kegelstumpfförmigen Endbereichen (16, 17) angeordneten zylindrischen Mittelbereich (15) aufweist.

7. Stützplatte nach Anspruch 6, dadurch gekennzeichnet, daß der Durchmesser des zylindrischen Mittelbereiches (15) dem Durchmesser der angrenzenden Grundflächen eines jeden Kegelstumpfes (16, 17) entspricht.

8. Stützplatte nach einem der vorangehenden Ansprüche, dadurch gekennzeichnet, daß die Seitenlinien des Kegelstumpfes (16, 17) relativ zur Frontseite bzw. relativ zur Rückseite unter einem Winkel α zwischen 50° und 70°, vorzugsweise zwischen 55° und 65°, ausgerichtet sind.

9. Stützplatte nach einem der vorangehenden Ansprüche, dadurch gekennzeichnet, daß die Durchtrittsöffnungen (8) in Strömungsrichtung (3) des Fluids gesehen bikonkav ausgebildete Seitenwände aufweisen.

10. Stützplatte nach einem der vorangehenden Ansprüche, dadurch gekennzeichnet, daß die Stützplatte (1) eine erste Reihe von unmittelbar dem Stützplattenrand zugeordneten Durchtrittsöffnungen (8) aufweist und daß die übrigen Durchtrittsöffnungen (8) so angeordnet sind, daß jede Durchtrittsöffnung (8) von sechs weiteren Durchtrittsöffnungen (8) umgeben ist.

11. Stützplatte nach einem der vorangehenden Ansprüche, dadurch gekennzeichnet, daß die Stützplatte (1) die Form eines Vieleckes, insbesondere eines Sechseckes bis Zwölfeckes, oder die Form eines Kreises aufweist.

12. Verwendung der Stützplatte nach einem der vorangehenden Ansprüche zur Halterung eines Filters in einer einem Extruder für Kunststoffe zugeordneten Filtereinrichtung.

## Claims

1. A supporting plate for a filter in a fluid filter device, said filter being positioned essentially perpendicular to the flowing direction of the fluid, whereby said filter is supported by a perforated plate on its rear side,
charcaterized in that the supporting plate is provided in front of the filter (9), relative to the flowing direction of the fluid to be filtered, whereby the filter (9) is in contact with the supporting plate, that said supporting plate contains a large number of holes which pass from the front side of the supporting plate to the rear side, and that each hole (8) contains in the area of the front side (6) and in the area of the rear side (7) a distal section (16, 17) which is widened relative to the smallest cross-section of the hole (8), whereby this distal section (16, 17) being of such a shape, that the total area of the edges (13, 14) between the holes (8) is decreased in such a way, that the supporting plate (1) contains on its rear side (7) directed to the filter (9) at the level of the rear side (7) only mainly triangular-like portions of the edges (13) and on its front side (6) directed away from the filter (9) at the level of the front side (6) only line-shaped edges (14).

2. The supporting plate according to claim 1, characterized in that the edges (14) or the portions of edges (13) provide a total area in the level of the front side (6) or the rear side (7) which is between 30 % and 2 %, relative to the total area of the front side (6) or the rear side (7).

3. The supporting plate according to claim 1 or 2, characterized in that the edges (14) or the portions of edges (13) provide a total area in the level of the front side (6) or the rear side (7) which is between 15 % and 5 %, relative to the total area of the front side (6) or the rear side (7).

4. The supporting plate according to one of the preceding claims, characterized in that each hole (8) provides a distal section (17) directed to the front side (6) of the supporting plate (1) in the shape of a truncated cone and a distal section (16) directed to the rear side (7) of the supporting plate (1) in the shape of a truncated cone.

5. The supporting plate according to claim 4, characterized in that the bases of both distal sections (16, 17) shaped like a truncated cone abut each other and constitute the hole (8).

6. The supporting plate according to claim 4, characterized in that each hole (8) comprises a cylindrical middle section (15) between the distal sections (16, 17) shaped like a truncated cone.

7. The supporting plate according to claim 6, characterized in that the diameter of the cylindrical middle section corresponds to the adjacent diameter of the base area of each of the truncated cones (16, 17).

8. The supporting plate according to one of preceding claims, characterized in that the side lines of the truncated cone (16, 17) make an angle α of between 50° and 70°, preferably between 55° and 65°, relative respectively to the front side or relative to the rear side.

9. The supporting plate according to one of the preceding claims, characterized in that said holes (8) comprise side walls in the flowing direction (3) of said fluid with a double-concave shape.

10. The supporting plate according to one of the preceding claims, characterized in that the supporting plate (1) contains a first row of holes (8) directly adjacent to the border of the supporting plate and that the arrangement of the other holes (8) is of such a design, that each hole (8) is surrounded by six further holes (8).

11. The supporting plate according to one of the preceding claims, characterized in that the supporting plate (1) has a polygon shape, in particular has a hexagon till a dodecagon shape, or has a circular shape.

12. The use of the supporting plate according to one of the preceding claims to support a filter in a fluid device being a part of an extruder for synthetic material.

## Revendications

1. Plaque de support pour un filtre prévu dans un dispositif de filtration de fluide disposé essentiellement à la perpendiculaire de la direction d'écoulement et dont le coté dorsal est monté sur une plaque perforée, caractérisé en ce que la plaque de support contre laquelle repose le filtre (9) est disposée en amont du filtre (9) dans la direction d'écoulement (3) du fluide à filtrer, en ce que la plaque de support présente une multiplicité d'ouvertures de passage qui s'étendent depuis le coté frontal de la plaque de support jusqu'au côté dorsal de celle-ci, et dans la zone du coté frontal (6) et dans la zone du côté dorsal (7), chaque ouverture de passage (8) présente une région d'extrémité (16, 17) plus grande que la plus petite section transversale de l'ouverture de passage (8), et les régions d'extrémité (16, 17) sont configurées de telle sorte que la surface totale des traverses (13, 14) prévues entre les ouvertures de passage (8) est diminuée de sorte que sur son côté dorsal (7) tourné vers le filtre (9), la plaque de support (1) présente, dans le plan du côté dorsal (7), uniquement des tronçons de traverse (13) essentiellement triangulaires et, sur son coté frontal (6) éloigné du filtre (9), dans le plan du coté frontal (6), uniquement des traverses (14) de forme linéaire.

2. Plaque de support selon la revendication 1, caractérisée en ce que les traverses (14) ou les tronçons de traverse (13) occupent, dans le plan du coté frontal (6) ou du côté dorsal (7), une surface totale qui représente entre 30 % et 2 % de la surface totale du coté frontal (6) ou du côté dorsal (7).

3. Plaque de support selon la revendication 1 ou 2, caractérisée en ce que les traverses (14) ou les tronçons de traverse (13) occupent dans le plan du côté frontal (6) ou du côté dorsal (7) une surface totale qui est comprise entre 15 % et 5 % de la surface totale du côté frontal (6) ou du côté dorsal (7).

4. Plaque de support selon l'une des revendications précédentes, caractérisée en ce que chaque ouverture de passage (8) comprend une zone d'extrémité (17) en forme de tronc de cône pointant vers le coté frontal (6) de la plaque de support (1) et une zone d'extrémité (16) en forme de tronc de cône pointant vers le côté dorsal (7) de la plaque frontale (1).

5. Plaque de support selon la revendication 4, caractérisée en ce que les surfaces de base des deux zones d'extrémité (16, 17) en forme de tronc de cône se raccordent directement l'une à l'autre pour former l'ouverture de passage (8).

6. Plaque de support selon la revendication 4, caractérisée en ce que chaque ouverture de passage (8) présente une zone centrale cylindrique (15) disposée entre les zones d'extrémité (16, 17) en forme de tronc de cône.

7. Plaque de support selon la revendication 6, caractérisée en ce que diamètre de la zone centrale cylindrique (15) correspond au diamètre de la surface de base adjacente de chaque tronc de cône (16, 17).

8. Plaque de support selon l'une des revendications précédentes, caractérisée en ce que les lignes latérales du tronc de cône (16, 17) sont orientées par rapport au côté frontal ou par rapport au côté dorsal sous un angle α compris entre 50° et 70°, de préférence entre 55° et 65°.

9. Plaque de support selon l'une des revendications précédentes, caractérisée en ce que, vues dans la direction d'écoulement (3) du fluide, les ouvertures de passage (8) présentent des parois latérales de forme biconcave.

10. Plaque de support selon l'une des revendications précédentes, caractérisée en ce que la plaque de support (1) présente une première série d'ouvertures de passage (8) associées directement au bord de la plaque de support, et en ce que les autres ouvertures de passage (8) sont disposées de telle sorte que chaque ouverture de passage (8) soit entourée par six autres ouvertures de passage (8).

11. Plaque de support selon l'une revendications précédentes, caractérisée en ce que la plaque de support (1) présente la forme d'un polygone, en particulier celle d'un hexagone à celle d'un dodécagone, ou la forme d'un cercle.

12. Utilisation de la plaque de support selon l'une des revendications précédentes pour le support d'un filtre dans un dispositif de filtration associé à une extrudeuse de matière synthétique.
